Europäisches Patentamt

European Patent Office

Office européen des brevets

(19)

(11) Numéro de publication: **0 018 861**
**B1**

(12) ## FASCICULE DE BREVET EUROPEEN

(45) Date de publication du fascicule du brevet:
**10.08.83**

(21) Numéro de dépôt: **80400417.4**

(22) Date de dépôt: **28.03.80**

(51) Int. Cl.³: **G 01 N 21/89,** G 06 F 15/20,
A 24 C 1/04

(54) **Procédé et dispositif de saisie sous forme numérique d'une information vidéo représentative d'un produit en feuille.**

(30) Priorité: **11.04.79 FR 7909126**

(43) Date de publication de la demande:
**12.11.80 Bulletin 80/23**

(45) Mention de la délivrance du brevet:
**10.08.83 Bulletin 83/32**

(84) Etats contractants désignés:
**BE DE GB NL**

(56) Documents cités:
**EP-A-0 004 170**
**DE-A-2 453 865**
**FR-A-2 400 852**
**US-A-3 560 096**
**US-A-3 729 619**
**US-A-3 781 531**
**US-A-4 149 089**

(73) Titulaire: **SERVICE D'EXPLOITATION INDUSTRIELLE DES TABACS ET DES ALLUMETTES, 53 quai d'Orsay, F-75340 Paris Cedex 07 (FR)**

(72) Inventeur: **Leclerc, Jean-François, 29 rue des Aides, F-45000 Orleans (FR)**

(74) Mandataire: **Bloch, Robert et al, Cabinet ROBERT BLOCH 39 avenue de Friedland, F-75008 Paris (FR)**

Procédé et dispositif de saisie sous forme numérique d'une information vidéo représentative d'un produit en feuille

La présente invention concerne un procédé et un dispositif pour fournir sour forme numérique une information représentative du contour extérieur d'un produit en feuille et des trous qu'il peut comporter, lorsque ces trous doivent, vu leurs dimensions, être pris en considération pour l'utilisation du produit, à partir d'un signal vidéo analogique composé de lignes d'image et représentatif de l'image du dit produit posé sur un support.

Lorsqu'on doit découper des pièces de forme déterminée dans un produit en feuille de forme extérieure variable et pouvant de plus comporter des trous, par exemple lorsqu'on découpe des capes de cigare dans une feuille de tabac, il faut s'efforcer d'obtenir une utilisation optimale du produit et des procédés de calcul automatique ont été mis au point à cet effet.

La donnée de base que doit recevoir le calculateur est le contour extérieur du produit et les trous qu'il peut comporter, dans la mesure où ces trous sont de dimensions telles qu'on doit en tenir compte pour déterminer le plan de découpe optimal.

Cependant, le signal vidéo analogique ne peut être exploité par le calculateur et il faut en premier lieu le transformer en signal numérique, selon le procédé connu qui consiste à comparer le signal vidéo, pour chaque point d'image, à un seuil déterminé, et à coder le point «1» ou «0» suivant que l'intensité du signal est supérieure ou inférieure au seuil. Le seuil sera choisi de façon appropriée pour que le signal soit codé «1» (resp. «0») pour le support et «0» (resp. «1») pour le produit.

Le principe d'analyser la feuille et mémoriser les informations obtenues sur la feuille dans une mémoire binaire est déjà connu du FR-A-7 824 549.

Mais le signal numérique ainsi obtenu représente une quantité d'informations extrêmement élevée, et le traitement d'un tel signal nécessite des mémoires de capacité très importante et, d'une façon plus générale, des équipements très lourds, si l'on veut que la durée du traitement ne soit pas d'une longueur incompatible avec les exigences de la pratique. Une compression considérable de ce signal est donc indispensable.

En outre, le fait que les trous ne soient à prendre en considération qu'à partir d'une certaine dimension, correspondant à un nombre $n_1$ de points d'image, suppose que le critère correspondant soit appliqué au signal. Un traitement spéficique est nécessaire à cet effet.

En résumé, le problème posé consiste à transmettre au calculateur une information sous forme numérique contenant toutes les indications nécessaires, mais en même temps d'un volume aussi réduit que possible.

Le procédé selon l'invention comporte à cet effet les phases ci-après:

On détecte les transitions dans le signal numérique ainsi obtenu; on code ce signal numérique en un signal ou mot «feuille» lorsque le signal est à l'état «0» (resp. «1») et en un mot «support» lorsque le signal est à l'état «1» (resp. «0») et qu'il est relatif à un trou; on compare au seuil précité, exprimé par un nombre $n_1$ de points d'image, le nombre n de points codés «1» (resp. «0») qui se suivent, d'abord dans une ligne X (direction Y), puis dans des lignes consécutives X, X + 1, etc. (direction X); on transforme les signaux «support», si $n \geqslant n_1$, en signaux «défaut», et on les transmet inchangés si $n < n_1$; on met en mémoire uniquement les signaux précédant une transition, accompagnés de la position Y correspondante, en les inscrivant ligne par ligne dans le sens de l'analyse; on lit les informations mémorisées dans le sens inverse du sens de l'analyse, la ligne X + 1 étant lue avant ly ligne X; on transmet les signaux autres que les signaux «support» sans les modifier, et on traite les signaux «support» de la façon suivante: si un signal «support» d'une ligne X se situe au voisinage d'un signal «défaut» présent dans la ligne X + 1 lue précédemment, il est transformé en signal «défaut», et si ce n'est pas le cas, il n'est pas transmis.

Les signaux obtenus par le procédé selon l'invention représentent une quantité d'informations extrêmement réduite par rapport au signal vidéo de départ, et même par rapport au signal numérique obtenu en comparant le signal vidéo à un seuil, car seules les transitions sont transmises. En outre, seules les transitions intéressantes sont transmises, car le traitement selon l'invention a fait disparaître celles qui correspondent à des défauts non significatifs. Le signal résultant contient donc toutes les informations nécessaires, et cela sous une forme extrêmement condensée.

D'autres caractéristiques et avantages de la présente invention ressortiront de la description ci-après, faite en liaison avec les dessins annexés. Dans les dessins:

la figure 1 représente une feuille de tabac dont il s'agit d'analyser la forme;

la figure 2a représente une ligne du signal vidéo correspondant à la ligne indiquée à la figure 1;

la figure 2b représente les transitions du signal de la figure 2a par rapport à un premier seuil $S_1$;

la figure 2c représente les transitions du même signal par rapport à un second seuil $S_2$;

la figure 3 est un schéma synoptique du dispositif pour la mise en oeuvre du procédé selon l'invention;

la figure 4 est une vue à grande échelle d'un défaut de la feuille de la figure 1;

la figure 5 représente la partie «entrée» du dispositif de la figure 3, et

la figure 6 représente la partie «sortie» du dispositif.

L'application visée par la présente description concerne l'analyse de la forme — contour extérieur, nervures et défauts — d'une feuille de tabac dans laquelle on doit découper des capes de cigare, et il s'agit de fournir à un calculateur les données nécessaires pour que celui-ci élabore un plan de découpage assurant une utilisation optimale du produit.

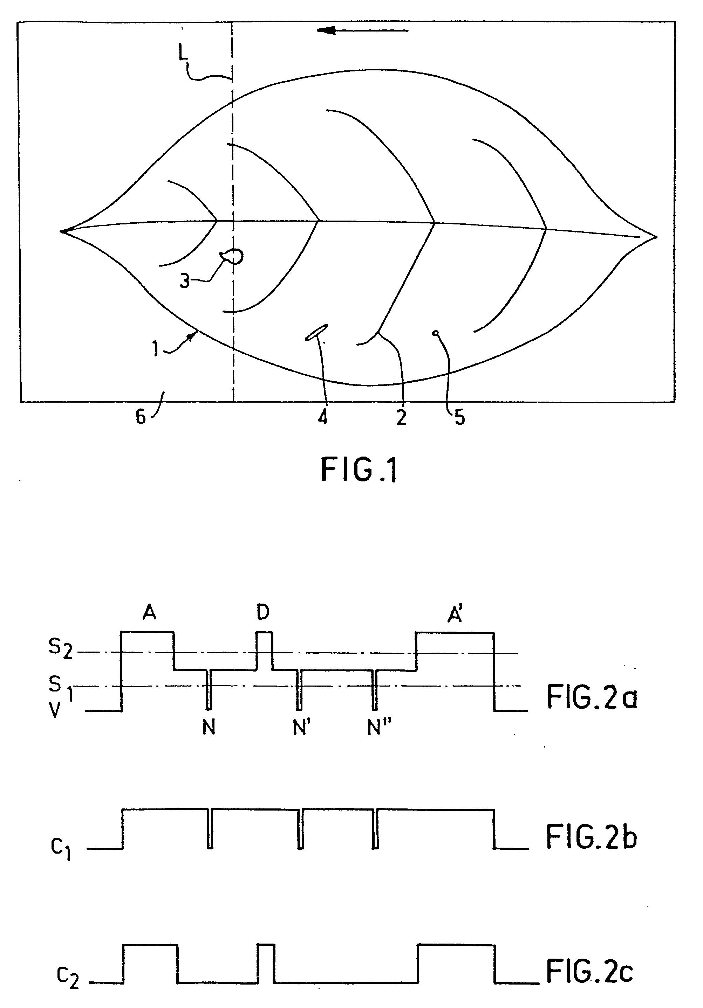

On a représenté à la figure 1 une feuille de tabac désignée dans son esemble par le repère 1. Les données dont il faut disposer pour élaborer un plan de découpage de capes de cigare sont:
— le contour extérieur de la feuille;
— la forme des nervures 2;
— le contour et la nature des défauts dont les dimensions sont telles qu'on doit en tenir compte: il faut distinguer ici entre un trou tel que 3, dont la présence dans une cape est à proscrire dans tous les cas, et une fente telle que 4, plus étroite, dont la présence dans une cape est admissible en dehors des bords.

En revanche, les défauts de petites dimensions tels que 5 ne doivent pas être signalés, car une cape de cigare peut parfaitement recéler de tels défauts.

Pour analyser la forme de la feuille, on utilise une caméra de type monoligne et on fait avancer la feuille dans le sens de la flèche sur un tapis 6, l'avance de la feuille donnant ainsi le balayage image. Le balayage ligne se fait perpendiculairement au déplacement de la feuille, comme le montre la ligne L en pointillé.

Le tapis 6 constitue un fond de forte luminosité, qui est formé par exemple d'une matière translucide éclairée en transparence, de manière à obtenir un bon contraste.

On a représenté à la figure 2a le signal vidéo fourni par la caméra pour la ligne L. Ce signal présente trois niveaux d'intensité possibles, un niveau élevé correspondant au support (sections A et A') et au défaut 3 (section D), un niveau moyen correspondant à la feuille, qui est peu opaque, et un niveau bas correspondant aux nervures (sections N, N', N'').

Le signal vidéo de la figure 2a a été représenté sous une forme continue, mais il est en fait échantillonné et comprend 1728 points d'image par ligne.

Ce signal n'est bien entendu pas utilisable tel quel par un calculateur, et il faut en premier lieu le convertir en un signal numérique.

On réalise cette conversion en comparant le signal vidéo à deux seuils $S_1$ et $S_2$ fixés de manière à permettre une discrimination entre les trois niveaux du signal. Le seuil haut $S_2$ est situé entre le niveau moyen et le niveau haut, et le seuil bas $S_1$ est situé entre le niveau bas et le niveau moyen.

On obtient par ces comparaisons deux signaux numériques $C_1$ et $C_2$. Le signal $C_1$ représenté à la figure 2b résulte de la comparaison avec le seuil bas $S_1$, et présente des états logiques «0» correspondant aux nervures, tandis que le signal $C_2$, représenté à la figure 2c, résulte de la comparaison avec le seuil haut $S_2$ et présente des sections à l'état logique «1» correspondant, soit à l'extérieur de la feuille, soit au défaut 3.

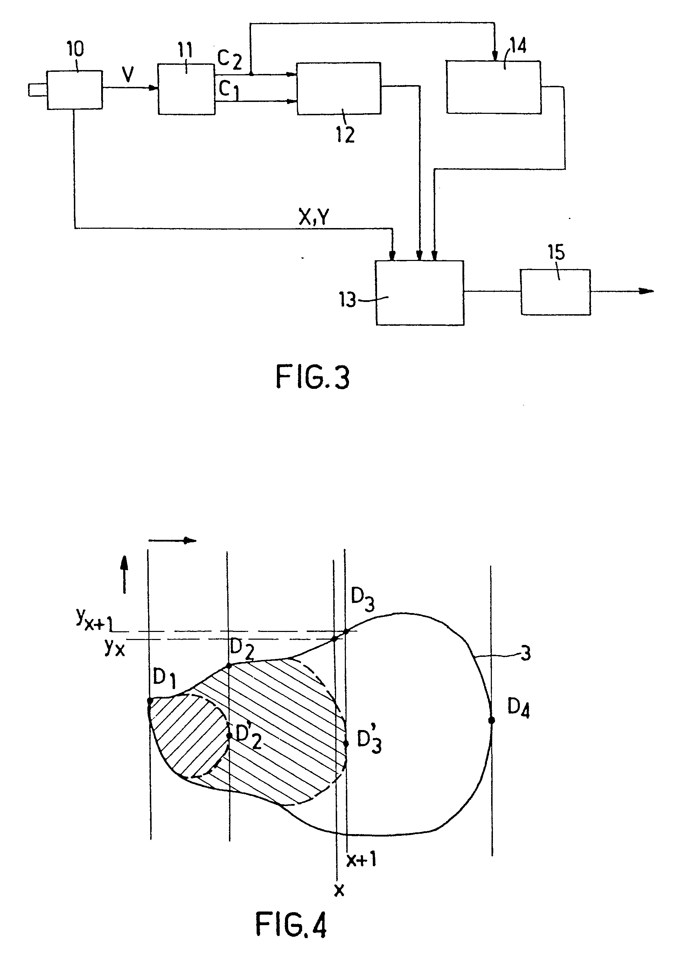

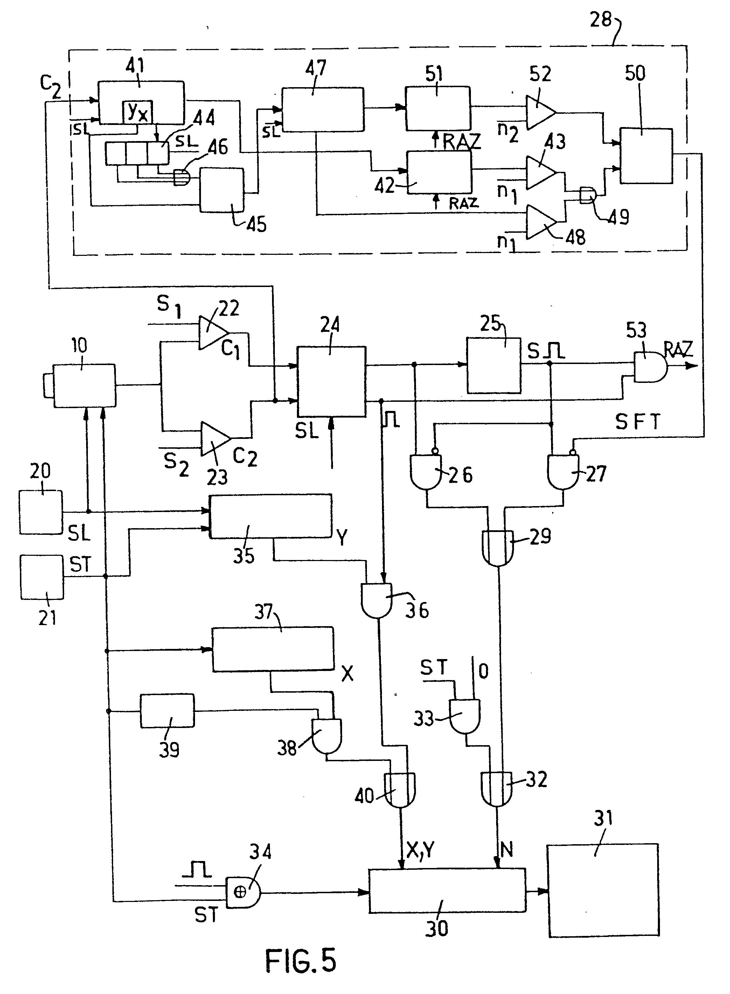

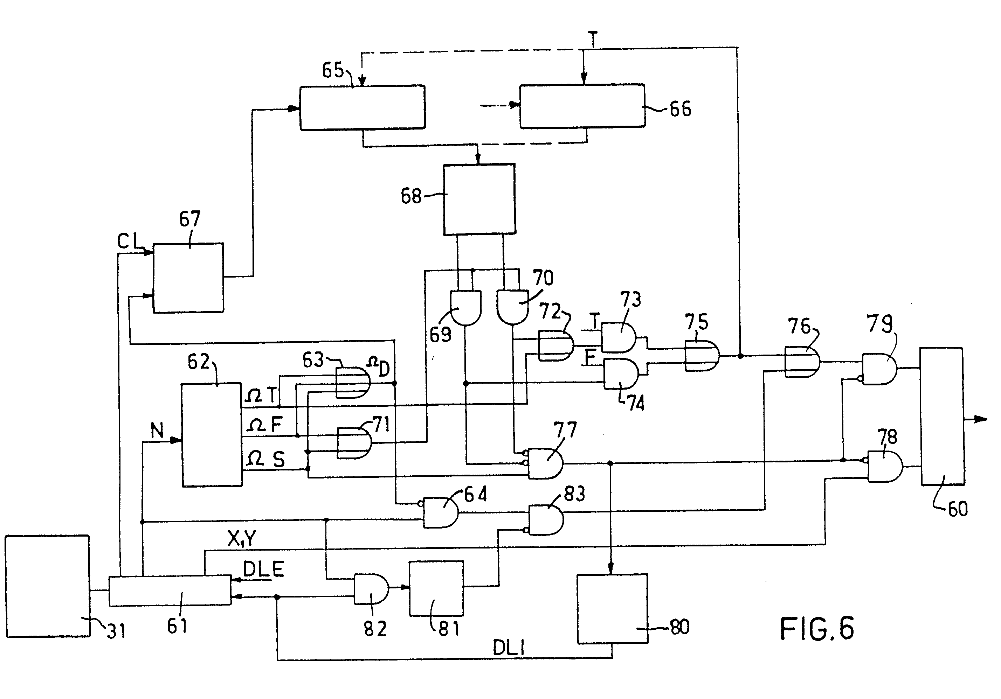

Les signaux numériques ainsi obtenus font ensuite l'objet d'un traitement dont on va exposer le principe en référence au schéma synoptique de la figure 3. On décrira ensuite plus en détails les circuits utilisés pour réaliser ce traitement en référence aux figures 5 et 6.

dans le schéma de la figure 3, on a représenté la caméra 10 qui fournit le signal vidéo V au dispositif de comparaison 11, lequel délivre les signauc numériques $C_1$ et $C_2$.

Les signaux $C_1$ et $C_2$ sont appliqués à un codeur 12 qui fait correspondre à chaque d'image un signal numérique de 3 bits $b_0 b_1 b_2$ et qui, en même temps, délivre une impulsion chaque fois qu'une transition d'un état à l'autre se produit dans l'un au moins des signaux $C_1$ et $C_2$.

Le codeur 12 délivre un signal «nervure» si $C_1$ = 0 et $C_2$ = 0, un signal «feuille» si $C_1$ = 1 et $C_2$ = 0, et un signal «support» si $C_1$ = 1 et $C_2$ = 1, chacun de ces signaux correspondant à un code $b_0 b_1 b_2$ différent.

En outre, le point précédant immédiatement la première transition support-feuille d'une ligne, qui correspond au bord de la feuille, fait l'objet d'un codage spécifique («bord») au lieu d'être codé «support».

On a de même prévu un code spécifique «fin de ligne» pour le dernier point d'une ligne, qui aurait dû normalement être codé «support».

Tous les signaux sont inscrits dans une mémoire 13 sous la commande des impulsions «transition» émises par le codeur 12. Cela implique que si pour chaque point d'une ligne le codeur 12 délivre un code $b_0 b_1 b_2$ correspondant aux valeurs de $C_1$ et $C_2$, seuls les signaux précédant immédiatement une transition seront inscrits dans la mémoire. On inscrit en même temps qu'un de ces signaux la position Y du signal considéré dans la ligne ou la position X de la ligne au début d'une ligne, ces positions étant fournies par les horloges assicoées à la caméra 10.

Tous les signaux autres que «support» sont transmis directement du codeur 12 à la mémoire. En revanche, les signaux «support» précédant une transition, qui correspondent au dernier point d'un défaut, sont soumis à une différenciation suivant la nature du défaut auquel ils correspondent.

Deux critères de différenciation sont appliqués.

On examine tout d'abord la dimension selon X ou selon Y du défaut. Si l'une des dimensions est supérieure à un nombre $n_1$ de points d'image (représentant 3 mm dans le présent exemple), le défaut est pris en considération. Dans le cas contraire, le défaut est considéré comme non gênant (par exemple référence 5 sur la figure 1). Avec une distance entre points de 0,25 mm, on a $n_1$ = 3 mm/0,25 mm = 12.

On examine ensuite la surface du défaut. Si elle est supérieure à une valeur $n_2$, le défaut est un trou, par exemple 3 sur la figure 1 et si elle est inférieure à $n_2$, il s'agit d'une fente (par exemple 4 sur la figure 1). Dans le présent exemple, $n_2$ représente 4 $mm^2$ et vaut donc 4 $mm^2$/0,25 mm × 0,25 mm = 64.

Ce traitement est effectué dans un circuit 14 qui, en fonction des signaux $C_2$ qu'il reçoit du dispositif de comparaison 11, transforme les signaux «support» (S) en signaux «fente» (F), «trou» (T), ou transmet les signaux «support» sans les modifier.

Il faut souligner que l'application des critères de différenciation ci-dessus se fait progressivement point à point sur chaque ligne, puis ligne à ligne. Cela a pour conséquence que les signaux S issus du codeur 12 et relatifs à un même défaut, par exemple à un trou, ne seront pas transformés de la même manière. Cela est illustré sur la figure 4, qui représente à plus grande échelle le défaut 3 de la figure 1.

Le sens d'analyse est indiqué par les flèches. Les signaux précédant les transitions $D_1 D_2 D_3 D_4$ seront donc codés «support» par le codeur 12. L'application des critères ci-dessus donne les résultats suivants:
— les signaux précédant les transitions dans la

section $D_1$ $D_2$ ne sont pas transformés et sont codés «support» car, jusqu'à la ligne passant par $D_2$, la dimension du défaut selon Y reste inférieure à $n_1$;

— les signaux précédant les transitions dans la section $D_2$ $D_3$ sont codés «fente» car la dimension du défaut est au moins égale à $n_1$, mais la surface du défaut reste inférieure à $n_2$ jusqu'à la ligne passant par $D_3$;

— les signaux précédant les transitions dans la section $D_3$ $D_4$ sont codés «trou» car, à partir de la ligne passant par $D_3$, la surface du défaut franchit la valeur $n_2$.

En d'autres termes, si le défaut se terminait en $D'_2$, comme indiqué par les hachures, il serait codé «support» et ne devrait pas être ultérieurement transmis au calculateur. S'il se terminait en $D'_3$ il serait codé «support» sur la section $D_1$ $D_2$ et «fente» sur la section $D_2$ $D_3$.

Le traitement précité conduira donc dans de nombreux cas à trois codages différents pour le même trou, ou à deux codages différents pour la même fente. En outre, les petits défauts qu'il ne faut pas prendre en considération sont codés «support».

Pour obtenir à partir des signaux inscrits dans la mémoire 13 des informations exploitables, on effectue la lecture dans la mémoire 13 dans le sens inverse du sens d'écriture, qui correspondait au sens d'analyse.

Les signaux autres que les signaux S, F, T — c'est-à-dire les signaux «feuille», «nervure», «bord» et «fin de ligne» — sont transmis sans traitement.

Les signaux S, F, T qui arrivent dans le sens inverse au sens de leur génération sont traités dans un circuit 15 de manière que, d'une part, le code relatif à un défaut soit le même sur toute l'étendue du défaut et, d'autre part, que les signaux S relatifs à des petits défauts ne soient pas transmis.

On y parvient grâce à la lecture de la mémoire 13 effectuée en sens inverse de l'écriture. Si l'on considère le défaut de la figure 4, les signaux de lecture obtenus seront, dans l'ordre, T, F, S. Le circuit 15 sera conçu pour transformer un signal F présent dans une ligne X en signal T si l'on constate qu'un signal T est présent dans la ligne X + 1, qui est la ligne de lecture précédente, et que la position $Y_x$ du signal F dans la ligne X est voisine de la position $Y_{x+1}$ du signal T dans la ligne X + 1. De proche en proche, tous les signaux «fente» de la section $D_2$ $D_3$ seront transformés en signaux «trou».

De façon analogue, les signaux «support» de la section $D_1$ $D_2$ seront transformés en signaux «trou», et au total toutes les transitions de $D_1$ à $D_4$ seront codées «trou», ce qui est le but recherché.

Le même traitement s'appliquera si le défaut est une fente. Dans ce cas, les signaux «support» suivant immédiatement les signaux «fente» (dans le sens de la lecture) seront transformés en signaux «fente».

Enfin, les signaux «support» non précédés de signaux «fente» ou «trou» dans des positions Y voisines seront supprimés puisqu'ils correspondent nécessairement à des petits défauts qui n'ont pas à être pris en considération. Dans ce cas, par exception au principe général de transmission des signaux «feuille», on ne transmet pas un signal «feuille» quisuit immédiatement un signal «support», de manière à éliminer toute trace du défaut dans l'information fournie au calculateur.

On va maintenant décrire plus en détails, en référence à la figure 5, la partie «entrée» du dispositif de la figure 3, à savoir les éléments 10-14 de la figure 3.

La caméra 10 reçoit d'une horloge 20 un signal de rythme SL qui définit la fréquence d'échantillonnage du signal vidéo, et l'horloge 21 lui fournit un signal ST définissant la fréquence ligne du signal vidéo.

Le signal vidéo est comparé aux seuils $S_1$ et $S_2$ dans des comparateurs respectifs 22 et 23 qui délivrent les signaux numériques $C_1$ et $C_2$ représentés aux figures 2b et 2c. Ces signaux sont appliqués à un codeur 24 qui reçoit le signal SL et qui génère des signaux numériques de 3 bits pour chaque point d'image, correspondant à un couple de valeurs de $C_1$ et $C_2$.

Comme on l'a dit plus haut, le codeur délivre des signaux «nervure» (si $C_1 = 0$ et $C_2 = 0$), «feuille» (si $C_1 - 1$ et $C_2 = 0$) et «support» (si $C_1 = 1$ et $C_2 = 1$).

Le codeur 24 détecte également les transitions qui apparaissent dans le signal $C_1$ ou $C_2$ et génère une impulsion    à chaque transition.

Un code «bord» particulier remplace le signal «support» qui précède immédiatement la première transition négative de $C_2$ qui se produit dans une ligne donnée.

Il faut noter, en ce qui concerne le codeur 24, qu'il s'agit d'un ou de plusieurs composants du commerce qu'il suffit de câbler convenablement de manière à obtenir les résultats voulus.

Les signaux codés issus du codeur 24 sont appliqués à un décodeur 25 qui ne délivre une impulsion S   que lorsqu'il reçoit un signal «support». La sortie du codeur 24 et la sortie inversée du décodeur 25 sont appliquées à une porte ET 26 qui ne laisse donc passer que les signaux autres que «support».

Les impulsions issus du décodeur 25 autorisent la transmission par la porte ET 27 des signaux issus du circuit de traitement 28, qui se substituent ainsi aux signaux «support» délivrés par le codeur 24.

L'ensemble des signaux issus des portes 26 et 27, qu'on appellera signaux «nature» (N), sont réunis dans la porte OU 29 et sont appliqués à l'interface d'écriture 30 d'une mémoire 31 du type RAM par l'intermédiaire d'une porte OU 32. La porte OU 32 a son autre entrée reliée à une porte ET 33 qui reçoit, d'une part, le signal d'horloge ST et, d'autre part, un signal nul, de manière qu'a chaque fin de ligne soit associé un signal nul qui se combine aux signaux issus de la porte OU 29.

L'inscription dans la mémoire 31 d'un signal issu de la porte OU 32 n'a lieu que lorsque l'interface d'écriture 30 reçoit une demande d'écriture d'une porte OU-exclusif 34 à laquelle sont appliquées les impulsions    émises par le codeur 24 à chaque transition (sur $C_1$ ou $C_2$). Il en résulte que, parmi les signaux issus de la porte 29, seuls les signaux précédant immédiatement une transition seront inscrits dans la mémoire 31.

La porte OU-exclusif 34 reçoit également le signal

d'horloge ST de manière à permettre l'inscription du signal de fin de ligne fourni par la porte 33.

L'interface d'écriture 30 reçoit en outre sous forme codée les coordonnées X et Y associées à tout signal issu de la porte 29. X définit le rang de la ligne à laquelle appartient le point d'image correspondant au signal, et Y définit la position du point dans la ligne considérée.

La coordonnée Y est fournie par un compteur 35 qui reçoit les signaux d'horloge SL et ST, et dont la sortie est appliquée à une porte ET 36 recevant d'autre part les impulsions de transition $\pi$ du codeur 24.

La coordonnée X est fournie par un compteur 37 qui reçoit le signal d'horloge ST. La sortie du compteur 37 est reliée à une porte ET 38 reliée également à une ligne à retard 39, et dont la sortie est reliée à la porte OU 40 également reliée à la sortie de la porte ET 36.

Par conséquent, les valeurs Y ne sont inscrites que pour les points précédant une transition, ce qui établit la correspondance entre les valeurs Y inscrites et les signaux codés issus de la porte 29 qui s'inscrivent dans la mémoire 31. Quant aux valeurs X, elles sont inscrites au début de chaque ligne.

On va maintenant décrire plus en détail le circuit de traitement 28.

Une mémoire 41 du type RAM reçoit le signal $C_2$ issu du comparateur 23 ainsi que le signal d'horloge SL. Les signaux qui s'inscrivent dans la mémoire 41 correspondant donc chacun à un point d'image. Ces signaux sont à l'état «1» lorsque les points correspondants appartiennent au support. La capacité de la mémoire 41 est juste suffisante pour que les signaux $C_2$ d'une ligne puissent être inscrits dans la mémoire. Cette capacité est donc $1728 \times 1$ bit puisqu'une ligne comprend 1728 points. Il en résulte que l'écriture des signaux d'une ligne X provoque l'effacement des signaux de la ligne précédente X - 1.

La sortie de la mémoire 41 est reliée à un sommateur 42 qui délivre un signal représentatif du nombre de «1» consécutifs qui lui sont fournis par la mémoire 41. Le sommateur 42 est remis à zéro lorsqu'il reçoit une impulsion RAZ d'une porte ET 53 recevant les impulsions $\pi$ du codeur 24 t les impulsions $S\pi$ du décodeur 25. La remise à zéro s'effectue donc lors de la transition qui signale la fin du défaut dans une ligne (par esemple points $D_2$, $D_3$ à la figure 4).

Le signal issu du sommateur 42 est donc représentatif de la dimension selon Y du défaut correspondant. Ce signal est appliqué à un dispositif à seuil 43 dont la sortie est à l'état «1» si le signal d'entrée est supérieur à une valeur $n_1$ égale à 12 dans le présent exemple.

Pour déterminer la dimension du défaut selon X, il faut compteur le nombre de «1» qui se suivent d'une ligne à l'autre. Pour cela, il faut comparer le contenu de la mémoire 41 pour un point Y d'une ligne X aux valeurs optenues pour les points Y - 1, Y et Y + 1 de la ligne précédente X - 1. On y parvient grâce à un registre à décalage 44 à trios étages dans lequel s'inscrit la valeur Y + 1 de la ligne X - 1 en même temps que la valeur Y de la ligne X s'inscrit dans la mémoire 41. L'écriture de la valeur Y + 1 dans le registre 44 provoque le décalage d'un pas, si bien que le registre contient en permanence les valeurs Y - 1, Y et Y + 1 de la ligne X - 1. L'écriture dans la mémoire 41 et le transfert dans le registre 44 sont exécutés pendant la première moitié d'une période du signal SL.

Pentant la seconde moitié, on lit la valeur $Y_x$ qui vient d'être inscrite dans la mémoire 41 et les valeurs Y - 1, Y et Y + 1 de la ligne X - 1 contenues dans le registre 44. Un codeur 45 reçoit, d'une part, la valeur $Y_x$ et d'autre part le signal de sortie d'une porte OU 46 reliée aux trois étages du registre 44. Le codeur 45 alimente une mémoire RAM 47 du même type que la mémoire 41, mais d'une capacité de $1728 \times 3$ bits.

Le codeur 45 peut adresser à la mémoire 47 trois signaux différents suivant les signaux qui lui sont appliqués.

Si la valeur $Y_x$ lue dans la mémoire 41 est «0», le codeur 45 délivre un signal qui commande l'écriture d'un «0» dans la mémoire 47.

Si la valeur $Y_x$ est «1» et que les valeurs dans le registre à décalage 44 sont toutes égales à «0», le codeur 45 délivre un signal qui commande l'écriture d'un «1» dans la mémoire 47. Il s'agit dans ce cas du commencement d'un défaut.

Enfin, si valeur $Y_x$ est «1» et que l'une au moins des valeurs lues dans le registre 44 est égale à «1», l'inscription du défaut a déjà commencé à la ligne précédente. Le codeur 45 délivre un signal qui commande l'incrémentation de la case correspondante de la mémoire 47. La mémoire 47 fournit ainsi la dimension du défaut selon X au selon une pente d'au plus 45°, la valeur $Y_x$ étant comparée non seulement à la valeur Y de la ligne X - 1, mais aussi aux valeurs adjacentes Y - 1 et Y + 1.

La valeur lue dans la mémoire 47 est appliquée à un dispositif à seuil 48 semblable au dispositif 43, qui délivre une impulsion lorsque le signal d'entrée la valeur $n_1$ précitée — donc lorsque la dimension du défaut suivant X dépasse 3 mm.

Les sorties des dispositifs à seuil 43 et 48 sont réunies dans une porte OU 49 dont la sortie est reliée à un codeur 50 délivrant des mots de 3 bits.

D'autre part, les valeurs contenues dans la mémoire 47 sont additionnées dans un sommateur 51 analogue au sommateur 42, qui est également remis à zéro par les impulsions RAZ. Le sommateur 51 effectue l'addition selon Y des valeurs contenues dans la mémoire 47, qui sont des sommes selon X. La valeur de sortie du sommateur 51 est donc représentative de la surface du défaut.

Cette valeur est comparée à la valeur $n_2$ précitée, correspontant à 4 mm², dans un dispositif à seuil 52 qui délivre une impulsion au codeur 50 lorsque le signal d'entrée est supérieur à $n_2$.

Trois cas peuvent donc se présenter.

Si la sortie de la porte 49 est à l'état «0», le défaut a une dimension inférieure à $n_1$ et n'a pas à être pris en considération. Le codeur 50 délivre un signal S (support).

Si la porte 49 délivre une impulsion, mais que la sortie du dispositif 52 est à l'état «0», le défaut a une dimension supérieure à $n_1$, mais une surface inférieure à $n_2$. Il s'agit d'une fente et le codeur 50 délivre un signal F.

Enfin, si la sortie du dispositif 52 et celle de la porte 49 sont à l'état «1», le défaut a une dimension supérieure à $n_1$ et une surface supérieure à $n_2$; il s'agit d'un trou, pour lequel le codeur 50 délivre un signal T.

Il faut noter bien entendu que les mots délivrés par le codeur 50 sont choisis différents de ceux qui peuvent être fournis par la porte 26.

Comme on l'a dit plus haut, les signaux issus du codeur 50, qui constitue la sortie du circuit 28, sont appliqués à la porte 27 qui les transmet à la porte 29 lorsqu'elle reçoit une impulsion S du décodeur 25. Les signaux S, F, T ayant remplacé les signaux «support» sont inscrits dans la mémoire 31 par l'intermédiaire des portes 29 et 32.

Les codes pouvant être associés à une position Y donnée sur la ligne X sont donc: feuille - nervure - S (support) - F (fente) - T (trou) - bord - fin de ligne.

La mémoire 31 a une capacité qui permet l'enregistrement d'une image complète de la feuille, étant entendu que seuls sont inscrits les signaux précédant des transitions, avec leur position Y, et la position X au début de chaque ligne. Une capacité de 32 K mots est suffisante dans le présent exemple.

On va maintenant décrite la partie «sortie» du dispositif qui traite les informations enregistrées dans la mémoire 31 et les transmet à une mémoire tampon 60 servant d'intermédiaire avec le calculateur.

La lecture de la mémoire 31 s'effectue à mesure que la mémoire tampon 60 se vide, car chaque lecture du tampon 60 déclenche une demande de lecture DLE appliquée à l'interface de lecture 61 de la mémoire 31.

La mémoire 31 est lue dans le sens inverse du sens d'écriture, c'est-à-dire que l'ordre de lecture des lignes est X + 1, X, X - 1, etc.

Les signaux «nature» N lus dans la mémoire 31 sont appliqués à un décodeur 62 possédant trois sorties et qui délivre une impulsion $\Pi$ s sur l'une des sorties si le signal d'entrés est un signal «support» S, une impulsion $\Pi$ F sur une autre sortie si le signal d'entrée est «fente» et une impulsion $\Pi$ T si le signal appliqué est «trou».

Les impulsions $\Pi$ s, $\Pi$ F et $\Pi$ T sont appliquées à une porte OU 63 dont la sortie est reliée après inversion à une porte ET 64 recevant d'autre part les signaux N. La porte 64 transmet par conséquent tous les signaux N à l'exception des signaux S, F et T correspondant à des défauts.

Pour réaliser le traitement, décrit précédemment, des signaux S, F, T, consistant à rendre homogène le codage d'un défaut et à supprimer les codes «support» des défauts non significatifs, on compare chaque signal S ou F occupant la position Y dans une ligne X aux signaux compris entre les positions $Y - n_4$ et $Y + n_4$ de la ligne X + 1, qui est lue avant la ligne X. Si l'on trouve un signal T, les signaux S ou F sont transformés en signaux T, et si l'on trouve un signal F, les signaux S sont transformés en signaux F. Dans le présent exemple, $n_4$ est choisi égal à 3.

On utilise pour effectuer cette comparaison deux mémoires 65 et 66 de type RAM fonctionnant en alternance, la lecture de l'une se faisant pendant l'inscription dans l'autre. Sur la figure 5, la mémoire 65 est la mémoire «précédente» que l'on lit, et la mémoire 66 est la mémoire «actuelle» dans laquelle on écrit.

Le fonctionnement des mémoires 65 et 66 est commandé par un séquenceur 67, constitué par un élément PROM, qui reçoit les impulsions $\Pi$ D émises par la porte 63, ainsi que des impulsions de changement de ligne CL en provenance de l'interface de lecture 61. A la réception d'une impulsion CL, le séquenceur 67 commande l'alternance des mémoires 65 et 66.

Les sorties des mémoires 65 et 66 sont reliées à un décodeur 68 possédant deux sorties reliées respectivement à des portes ET 69 et 70. Le décodeur délivre une impulsion à la porte 69 lorsqu'il reçoit un signal F et à la porte 70 lorsqu'il reçoit un signal T. Les autres entrées des portes 69 et 70 sont reliées à la sortie d'une porte OU 71 qui reçoit les impulsions $\Pi$ F et $\Pi$ s issues du décodeur 62.

La sortie $\Pi$ T du décodeur 62 et la sortie de la porte 70 sont reliées à une porte OU 72 qui, lorsqu'elle est à l'état «1», autorise la transmission du signal T par une porte ET 73. Une porte ET 74 transmet le signal F lorsque la sortie de la porte 69 est à l'état «1».

Les sorties des portes 73 et 74 sont réunies dans une porte OU 75 dont la sortie est reliée aux mémoires 65 et 66 en vue de l'écriture.

Compte tenu de ce qui précède, seuls les signaux F et T sont incrits dans la mémoire «actuelle», à savoir la mémoire 66 dans le cas du dessin.

D'autre part, il est clair que les signaux T lus dans la mémoire 31 sont transmis sans modification. Les signaux T délivrés à la sortie de la porte 75 sont inscrits dans la mémoire 66. L'écriture d'un signal T dans la mémoire «actuelle» déclenche en même temps la remise à zéro de la case correspondante dans la mémoire «précédente».

Si le signal qui est appliqué au décodeur 62 est un signal S ou F, le séquenceur 67 déclenche la lecture dans la mémoire «précédente» 65 des cases Y- 3 à Y + 3, Y étant la position du signal incident. Si dans l'une de ces cases un signal F ou T a été enregistré, le décodeur 68 émet une impulsion sur l'une de ses sorties qui autorise la transmission du signal de sortie de la porte 71, soit par la porte 69, soit par la porte 70. Si c'est la porte 69 qui devient passante, on obtient un signal F à la sortie de la porte 75 et si c'est la porte 70, on obtient un signal T.

Les signaux F ou T délivrés par la porte 75 sont réunis dans la porte OU 76 avec les signaux issus de la porte ET 64 et transmis par la porte ET 83 (décrite ci-après), qui sont tous les signaux autres que les codes S, F, T.

D'autre part, l'émission d'une impulsion par l'une des portes 69 et 70 bloque la porte ET 77 qui reçoit les impulsions $\Pi$ s du décodeur 62. Par conséquent, la porte 77 ne transmet que les impulsions s correspondant à des défauts négligeables, puisque seuls ceux-ci peuvent aboutir à des signaux S non suivis (dans le sens de l'analyse) de signaux F ou T. L'émission d'une impulsion par la porte 77 bloque la porte ET 78 qui transmet normalement les positions X ou Y lues dans la mémoire 31, de sorte que les positions X ou Y des signaux S correspondant à des défauts négligeables ne sont pas transmises, conformément à l'un des buts visés. De même, les impulsions issues de la porte 77 bloquent la porte ET 79 reliée à la sortie de la porte 76.

La sortie de la porte 77 est également reliée à un séquenceur 80 constitué par un élément PROM, qui adresse une demande de lecture DLI à l'interface de lecture 61 lorsqu'il reçoit une impulsion de la porte 77. Cette demande DLI déclenche la lecture du signal suivant — c'est-à-dire du signal précédent dans le sens de l'analyse. Si le séquenceur 80 identifie le signal suivant comme étant un signal «feuille», qui correspond donc au début d'un défaut non significatif, ce signal n'est pas transmis et le séquenceur 80 émet une nouvelle demande DLI, après quoi un signal est transmis et la lecture est à nouveau commandée par les demandes DLE issues du tampon 60. Si le signal suivant n'est pas un signal «feuille», le rôle du séquenceur 80 s'arrête et la demande de lecture suivante est faite à partir du tampon 60.

Ceci est obtenu au moyen d'un décodeur 81 qui reçoit les signaux N d'une porte ET 82 rendue passante par la demande DLI émise par le séquenceur 80. Si le décodeur 81 reçoit un signal «feuille», il délivre une impulsion qui bloque la porte ET 83, empêchant la transmission du signal «feuille» vers le tampon 60.

La description qui précède concerne l'application de l'invention au découpage de capes de cigare dans des feuilles de tabac. Il doit être clair cependant que l'invention n'est pas limitée à cette application, mais s'applique dans tous les cas où il s'agit d'analyser la forme d'un produit pouvant comporter des trous. Les critères utilisés pour l'analyse des trous pourront varier suivant les cas. Il pourra suffire par exemple d'appliquer un seul critère dimensionnel, en distinguant seulement entre défaut négligeable et défaut à prendre en considération et en abandonnant la distinction trou/fente. Un code unique «défaut» remplacerait alors les codes «trou» et «fente».

De même, la distinction entre feuille et nervure est particulière à l'application décrite et ne sera pas opérée dans d'autres applications.

Si ces distinctions ne sont pas nécessaires, le traitement pourra être effectué avec des circuits notablement simplifiés par rapport aux circuits décrits précédemment. Les modifications à apporter dans chaque cas, qui pourront consister simplement à supprimer des éléments, sont parfaitement à la portée de l'homme de l'art.

**Revendications**

1. Procédé pour fournir sous forme numérique une information représentative du contour extérieur d'un produit en feuille et des trous qu'il peut comporter, ces trous devant être pris en considération pour l'utilisation du produit lorsque leur dimension dépasse un seuil déterminé, à partir d'un signal vidéo analogique échantillonné composé de lignes d'image et représentatif de l'image du produit posé sur un support, dans lequel on compare le signal vidéo, pour chaque point ou échantillon d'image, à un seuil et on code le point «1» ou «0» suivant le résultat de la comparaison, caractérisé par le fait qu'on détecte les transitions dans le signal numérique ainsi obtenu; on code ce signal numérique en un signal ou mot «feuille» lorsque le signal est à l'état «0» (resp. «1») et en un mot «support» lorsque le signal est à l'état «1» (resp. «0») et qu'il est relatif à un trou; on compare au seuil précité, exprimé par un nombre $n_1$ de points d'image le nombre n de points codés «1» (resp. «0») qui se suivent, d'abord dans une ligne X (direction Y), puis dans des lignes consécutives X, X + 1, etc. (direction X); on transforme les signaux «support», si $n \geqslant n_1$, en signaux «défaut», et on les transmet inchangés $n < n_1$; on met en mémoire uniquement les signaux précédant une transition, accompagnés de la position Y correspondante, en les inscrivant ligne par ligne dans le sens de l'analyse; on lit les informations mémorisées dans le sens inverse du sens de l'analyse, la ligne X + 1 étant lue avant la ligne X; on transmet les signaux autres que les signaux «support» sans les modifier, et on traite les signaux «support» de la façon suivante: si un signal «support» d'une ligne X se situe au voisinage d'un signal «défaut» présent dans la ligne X + 1 lue précédemment, il est transformé en signal «défaut», et si ce n'est pas le cas, il n'est pas transmis.

2. Dispositif pour la mise en oeuvre du procédé selon la revendication 1, comprenant un appareil (10), délivrant un signal vidéo analogique échantillonné sous forme de lignes d'image successives et un comparateur (23) qui compare le signal vidéo à un seuil et délivre un signal numérique dont l'état résulte de ladite comparaison, caractérisé par le fait qu'il comprend un codeur (24) relié au comparateur, qui délivre une impulsion lorsqu'une transition se produit dans le signal d'entrée, et qui délivre des signaux numériques ou mots suivant la valeur du signal d'entrée et éventuellement des transitions, un circuit de traitement (28) recevant le signal numérique issu du comparateur (23), qui compte le nombre de «1» (resp. «0») consécutifs dans la même ligne X et dans les lignes successives, X, X + 1, etc., et qui délivre des mots «support» ou «défaut» suivant que ce nombre est inférieur ou supérieur à une valeur $n_1$, un circuit d'aiguillage (25, 26, 27, 29) relié au codeur (24) et au circuit de traitement (28) pour substituer les mots issus du circuit de traitement aux mots correspondants issus du codeur, une mémoire (31) dont les sens d'écriture et de lecture sont inverses et dans laquelle les signaux issus du circuit d'aiguillage sont inscrits en même temps que leur position Y sous la commande des impulsions de transition issues du codeur (24), un circuit de sortie (62, 75) recevant les signaux «support» mis en mémoire, qui transforme un signal «support» situé dans la ligne X au voisinage d'au moins un signal «défaut» situé dans la ligne X + 1 en signal «défaut» et ne transmet pas le signal «support» dans le cas inverse, et une mémoire tampon (60) qui reçoit les signaux «défaut» dudit circuit et les autres signaux de la mémoire.

3. Dispositif selon la revendication 2, caractérisé par le fait que le circuit de traitement (28) comprend une première mémoire vive (41) reliée au comparateur (23), un moyen (44, 46) pour comparer l'état du signal dans la position Y de la ligne X avec les états des signaux Y - 1, Y et Y + 1 de la ligne X - 1, une seconde mémoire vive (47) incrémentée chaque fois que le signal précité est à l'état «1» (resp. «0») en même temps que l'un au moins desdits signaux de la ligne X - 1, un sommateur (42) relié à la première mémoire (41), des dispositifs à seuil (43, 48) reliés respectivement au sommateur (41) et à la seconde mémoire (47) pour comparer leur contenu à la valeur $n_1$, et un codeur (50) relié à ces dispositifs à seuil.

4. Dispositif selon la revendication 3, caractérisé par le fait qu'un registre à décalage (44) à trois étages est associé à la première mémoire (41), le signal Y + 1 de la ligne X - 1 étant transféré de ladite mémoire dans le registre en même temps que le signal Y de la ligne X est inscrit dans la mémoire.

5. Dispositif selon l'une des revendications 3 et 4, caractérisé par le fait qu'un second sommateur (51) est relié à la seconde mémoire (47) et un dispositif à seuil (52) compare le contenu du second sommateur (51) à une valeur $n_2$, ce dispositif étant relié audit codeur (50).

6. Dispositif selon la revendication 2, caractérisé par le fait que le circuit de sortie comprend deux mémoires (65, 66) fonctionnant en alternance dans l'une desquelles on écrit les signaux de la ligne X en même temps qu'on lit ceux de la ligne X + 1 dans l'autre mémoire, et un moyen (67) pour comparer l'état du signal dans la position Y de la ligne X avec les états des signaux dans les positions Y - $n_4$ à Y + $n_4$ de la ligne X + 1.

7. Dispositif selon la revendication 2, caractérisé par le fait que la lecture de la mémoire (31) est commandée à partir de la mémoire tampon (60) et il est prévu un séquenceur (80) agencé pour commander la lecture d'un mot dans la mémoire (31) lorsque le mot procédent est un signal «support» qui n'a pas été transmis, et un circuit (81 - 83) pour bloquer la transmission de ce mot s'il s'agit d'un signal «feuille».

## Patentansprüche

1. Verfahren zur Lieferung einer in numerischer Form vorliegenden Information, die repräsentativ für die äussere Kontur eines blattförmigen Gegenstandes und für Löcher, die dieser Gegenstand aufweisen kann, ist, wobei diese Löcher für die Verwendung des Gegenstandes Berücksichtigung finden sollen, wenn ihr Ausmass einen vorgegebenen Grenzwert überschreitet, aus einem aufgegliederten Video-Analogsignal, das aus Bildzeilen zusammengesetzt und für das Bild des auf einer Unterlage liegenden Gegenstandes repräsentativ ist, bei dem man das Videosignal jedes Bild- oder Aufgliederungspunktes mit einem Grenzwert vergleicht und diesen Punkt als Ergebnis dieses Vergleiches mit «1» oder «0» kodiert, dadurch gekennzeichnet, dass man die Übergänge in dem auf diese Weise erhaltenen numerischen Signal ermittelt, dieses numerische Signal zu einem Signal oder Wort «Blatt», wenn das Signal den Zustand «0» (bzw. «1») hat, oder zu einem Wort «Unterlage» kodiert, wenn das Signal den Zustand «1» (bzw. «0») hat und ein Loch betrifft, dann bei dem vorgegebenen Grenzwert, der ausgedrückt ist durch eine Ziffer $n_1$ der Bildpunkte, die Anzahl n der aufeinanderfolgenden kodierten Punkte «1» (bzw. «0») vergleicht und zwar zuerst in einer Zeile X (Richtung Y) und in aufeinanderfolgenden Zeilen X, X + 1 usw. (Richtung X), und anschliessend die Signale «Unterlage», wenn n $\geqslant$ $n_1$, in Signale «Fehler» transformiert, und wenn n < $n_1$, unverändert weitergibt, dass man nur die einem Übergang vorhergehenden Signale in einen Speicher eingibt, begleitet von der korrespondierenden Position Y, indem man sie zeilenweise in Abtastungsrichtung einschreibt, dann die gespeicherten Informationen in umgekehrter Richtung zur Abtastungsrichtung abliest, wobei die Zeile X + 1 vor der Zeile X abgelesen wird, und dann die von den Signalen «Unterlage» verschiedenen Signale, ohne sie zu verändern, weitergibt, während man die Signale «Unterlage» in der folgenden Weise verarbeitet: Wenn ein Signal «Unterlage» einer Zeile X sich benachbart zu einem Signal «Fehler» in der vorher abgelesenen Zeile X + 1 befindet, wird es zum Signal «Fehler» transformiert, während, wenn dieses nicht der Fall ist, es nicht weitergegeben wird.

2. Vorrichtung zur Durchführung des Verfahrens nach Anspruch 1 mit einem Gerät (10) welches ein Video-Analogsignal liefert, das in Form von aufeinanderfolgenden Bildzeilen aufgegliedert ist, und mit einem Vergleicher (23), der das Videosignal mit einem Grenzwert vergleicht und ein numerisches Signal abgibt, dessen Zustand aus diesem Vergleich resultiert, dadurch gekennzeichnet, dass sie einen an den Vergleicher angeschlossenen Kodierer (24), der einen Impuls abgibt, wenn in dem Eingangssignal ein Übergang auftritt, und der numerische Signale oder Wörter entsprechend dem Wert des Eingangssignals und ggf. der Übergänge liefert, einen das von dem Vergleicher (23) herrührende numerische Signal empfangenden Verarbeitungskreis (28), der die Anzahl der in der gleichen Zeile X und in den folgenden Zeilen X, X + 1 usw. aufeinanderfolgenden «1» (bzw. «0») zählt und der Worte «Unterlage» oder «Fehler» in Abhängigkeit davon liefert, dass diese Anzahl kleiner oder grösser einem Wert $n_1$ ist, einen an den Kodierer (25) und den Verarbeitungskreis (28) angeschlossenen Verzweigungskreis (25, 26, 27, 29), um die von dem Verarbeitungskreis stammenden Wörter durch entsprechende von dem Kodierer stammende Wörter zu substituieren, einen Speicher (31), dessen Einschreibrichtung entgegengesetzt zur Ableserichtung ist und in den die von dem Verzweigungskreis kommenden Signale zusammen mit ihrer Position Y unter dem Befehl der von dem Kodierer (24) stammenden Übergangsimpulse eingeschrieben werden, einen Ausgangskreis (62, 75), der die in den Speicher eingegebenen Signale «Unterlage» empfängt, welcher ein Signal «Unterlage», welches sich in der Zeile X benachbart mindestens einem Signal «Fehler» in der Zeile X + 1 befindet in ein Signal «Fehler» transformiert und dieses Signal «Unterlage» im umgekehrten Fall nicht weitergibt, und einen Pufferspeicher (60) umfasst, der die Signale «Fehler» dieses Kreises und die weiteren Signale des Speichers empfängt.

3. Vorrichtung nach Anspruch 2, dadurch gekennzeichnet, dass der Verarbeitungskreis (28) einen ersten an den Vergleicher (23) angeschlossenen Zwischenspeicher (41), eine Einrichtung (44, 46), um den Zustand des Signals in der Position Y der Zeile X mit den Zuständen der Signale Y - 1, Y und Y + 1 der Zeile X - 1 zu vergleichen, einen zweiten Zwischenspeicher (47), der jedesmal anwächst, wenn das genannte Signal sich im Zustand «1» (bzw. «0») befindet, und zwar gleichzeitig wie mindestens eines der Signale der Zeile X - 1, einen an den ersten Speicher (41) angeschlossenen Summenbildner (42), Grenzwerteinrichtungen (43, 48), die an den Summenbildner (41) bzw. an den zweiten Speicher (47) angeschlossen sind, um deren Inhalt beim Wert $n_1$ zu vergleichen, und einen an diese Grenzwerteinrichtungen angeschlossenen Kodierer (50) umfasst.

4. Vorrichtung nach Anspruch 3, dadurch gekennzeichnet, dass an den ersten Speicher (41) ein Schieberegister (44) mit drei Stufen angeschlossen ist, wobei das Signal Y + 1 der Zeile X - 1 aus diesem Speicher in das Register überführt wird, und zwar gleichzeitig, wenn das Signal Y der Zeile X in den Speicher eingegeben wird.

5. Vorrichtung nach einem der Ansprüche 3 und 4, dadurch gekennzeichnet, dass ein zweiter Summenbildner (51) an den zweiten Speicher (47) angeschlossen ist, und dass eine Grenzwerteinrichtung (52) zum Vergleichen des Inhalts des zweiten Summenbildners (51) mit einem Wert $n_2$ vorgesehen ist, wobei diese Einrichtung an den Kodierer (50) angeschlossen ist.

6. Vorrichtung nach Anspruch 2, dadurch gekennzeichnet, dass der Ausgangskreis zwei alternierend funktionierende Speicher (65, 66) umfasst, wobei in einen dieser Speicher die Signale der Zeile X eingegeben werden, wenn gleichzeitig die Signale der Zeile X + 1 in dem anderen Speicher abgelesen werden, und dass eine Einrichtung (67) vorgesehen ist, um den Zustand des Signals in der Position Y der Zeile X mit den Zuständen der Signale in den Positionen Y - $n_4$ bis Y + $n_4$ der Zeile X + 1 zu vergleichen.

7. Vorrichtung nach Anspruch 2, dadurch gekennzeichnet, dass das Ablesen des Speichers (31) von dem Pufferspeicher (60) gesteuert wird, und dass ein Sequenzbildner (80) vorgesehen ist, um das Ablesen eines Wortes in dem Speicher (31) zu steuern, wenn das vorhergehende Wort ein Signal «Unterlage» ist, welches nicht übertragen worden ist, und dass weiterhin eine Schaltung (81 bis 83) vorgesehen ist, um die Übertragung dieses Wortes zu blockieren, wenn es sich um ein Signal «Blatt» handelt.

## Claims

1. A process for deriving digital information indicative of the outer contour of a leaf-like article and of the holes which it may comprise, said holes having to be taken into consideration for the use of the article when their dimensions exceed a determined threshold, from a sampled analog video signal composed of image lines and representing the image of the article placed on a support, said process comprising the steps of comparing the video signal, for each image dot or sample, with a threshold and coding the dot «1» or «0» according to the result of the comparison; detecting the transitions in the digital signal thus obtained; coding this digital signal as a «leaf» signal or word when the signal is in state «0» (or «1») and as a «support» word when the signal is in state «1» (or «0») and when it relates to a hole; comparing with the above-mentioned threshold, expressed by a number $n_1$ of image dots, the number n of dots coded «1» (or «0») which follow one another, firstly in a line X (direction Y), then in consecutive lines X, X + 1, etc. (direction X); converting the «support» signals if n $\geqslant$ $n_1$, into «flaw» signals and transmitting them unchanged if n < $n_1$; storing solely the signals preceding a transition, together with corresponding position data Y, by writing them line by line as said lines appear; reading the stored information in an order opposite the order of writing, whereby line X + 1 is read before line X; transmitting the signals other than the «support» signals unaltered, and processing the «support» signals as follows: if a «support» signal of a line X is located in the vicinity of a «flaw» signal present in previously read line X + 1, it is converted into a «flaw» signal, and if this is not be case, it is not transmitted.

2. An apparatus for carrying out the process of Claim 1, comprising means (10) for delivering a sampled analog video signal in the form of successive image lines, a comparator (23) which compares the video signal with a threshold and delivers a digital signal according to said comparison, characterized in that it comprises, a coder (24) connected to the comparator, which delivers a pulse when a transition occurs inthe input signal, and which delivers digital signal or words according to the value of the input signal and the transitions, a processing circuit (28) receiving the digital signal from the comparator (23), which counts the number of consecutive «1»s (or «0»s) in one line X and in successive lines X, X + 1, etc. and which delivers «support» or «flaw» words depending on whether said number is lower than or higher than a value $n_1$, a switching circuit (25, 26, 27, 29) connected to the coder (24) and to the processing circuit (28) for substituting the words from the processing circuit for the corresponding words from the coder, a memory (31) of which the directions of read-in and read-out are opposite and in which the signals from the switching circuit are entered together with their positions Y under the control of the transition pulses from the coder (24), an output circuit (62, 75) receiving the stored «support» signals, which converts a «support» signal located in line X in the vicinity of at least one «flaw» signal located in the line X + 1 into a «flaw» signal and does not pass the «support» signal in the opposite case, and a buffer (60) which receives the «flaw» signals from said circuit and the other signals from said memory.

3. The apparatus of Claim 2, characterized in that the processing circuit (28) comprises a first slive memory (41) connected to the comparator (23), means (44, 46) for comparing the state of the signal in the position Y of the line X with the states of the signals Y - 1, Y and Y + 1 of line X - 1, a second slive memory (47) incremented each time the above-mentioned signal is in state «1» (or «0») at the same time as at least one of said signals of the line X - 1, and adder (42) connected to said first memory (41), threshold devices (43, 48) connected respectively to the adder (42) and to the second memory (47) to compare their

contents with value $n_1$, and a coder (50) connected to said threshold devices.

4. The apparatus of Claim 3, characterized in that a three-stage shift register (44) is associated with the first memory (41), the signal $Y + 1$ of line $X - 1$ being transferred from said memory in the register at the same time as the signal $Y$ of line $X$ is entered in the memory.

5. The apparatus according to one of the claims 3 and 4, characterized in that a second adder (51) is added to the second memory (47) and a threshold device (52) compares the contents of the second adder (51) with a value $n_2$, this device being connected to said coder (50).

6. The apparatus according to claim 2, characterized in that the output circuit comprises two memories (65, 66) arranged for alternate operation in one of which are entered the signals of line $X$ at the same time as those of $X + 1$ are read-out in the other memory, and means (67) for comparing the state of the signal in the position $Y$ of line $X$ with the states of the signals in positions $Y - n_4$ to $Y + n_4$ of line $X + 1$.

7. The apparatus according to claim 2, characterized in that the read-out of the memory (31) is controlled from the buffer (60) and a sequencer (80) is provided for controlling the read-out of a word in the memory (31) when the preceding word is a «support» signal which has not been transmitted, and a circuit (81-83) for preventing the transmission of this word if it is a «leaf» signal.

FIG.1

FIG.2a

FIG.2b

FIG.2c

FIG.3

FIG.4

FIG.5

FIG.6